# EUROPEAN PATENT SPECIFICATION

(11) **EP 1 410 143 B1**
(45) Date of publication and mention of the grant of the patent: **26.10.2005**
(21) Application number: 02719514.8
(22) Date of filing: 17.04.2002
(51) Int. Cl.: G06F 1/00

(54) **PROCESSOR WITH PROTECTED TEST AND DEBUG MODE**
PROZESSOR MIT GESCHÜTZTEM PRÜFUNGS- UND FEHLERBESEITIGUNGSMODUS
Processeur avec mode de test et débogage protégé

(30) Priority: 10.05.2001 US 852942; 10.05.2001 US 852372; 11.05.2001 US 853226
(43) Date of publication of application: 21.04.2004
(73) Proprietor: ADVANCED MICRO DEVICES, INC., Sunnyvale, California 94088-3453 (US)
(72) Inventor: STRONGIN, Geoffrey, S., Austin, TX 78731 (US)
(74) Representative: Wright, Hugh Ronald
(86) International application number: PCT/US2002/011935
(87) International publication number: WO 2002/093336

(56) References cited:
- US-A- 5 826 007
- US-A- 6 026 016
- US-A- 6 154 819
- INTEL: "Intel 82802AB/82802AC Firmware Hub" DATASHEET INTEL, [Online] 30 November 2000 (2000-11-30), page 1-6,17-27 XP002257561 Retrieved from the Internet: <URL:http://www.intel.com/design/chipsets/ datashts/29065804.pdf> [retrieved on 2003-10-13]

## Description

This Application is a continuation-in-part of co-pending U.S. Patent Application No. 09/852,372, entitled, "Secure Execution Box and Method," filed on May 10, 2001, whose inventors are Dale E. Gulick and Geoffrey S. Strongin. This Application is also a continuation-in-part of co-pending U.S. Patent Application No. 09/852,942, entitled, "Computer System Architecture for Enhanced Security and Manageability," filed on May 10, 2001, whose inventors are Geoffrey S. Strongin and Dale E. Gulick.

### TECHNICAL FIELD

This invention relates generally to computing systems, and, more particularly, to a method and apparatus for protecting personal computer systems from unauthorized back door accesses.

### BACKGROUND ART

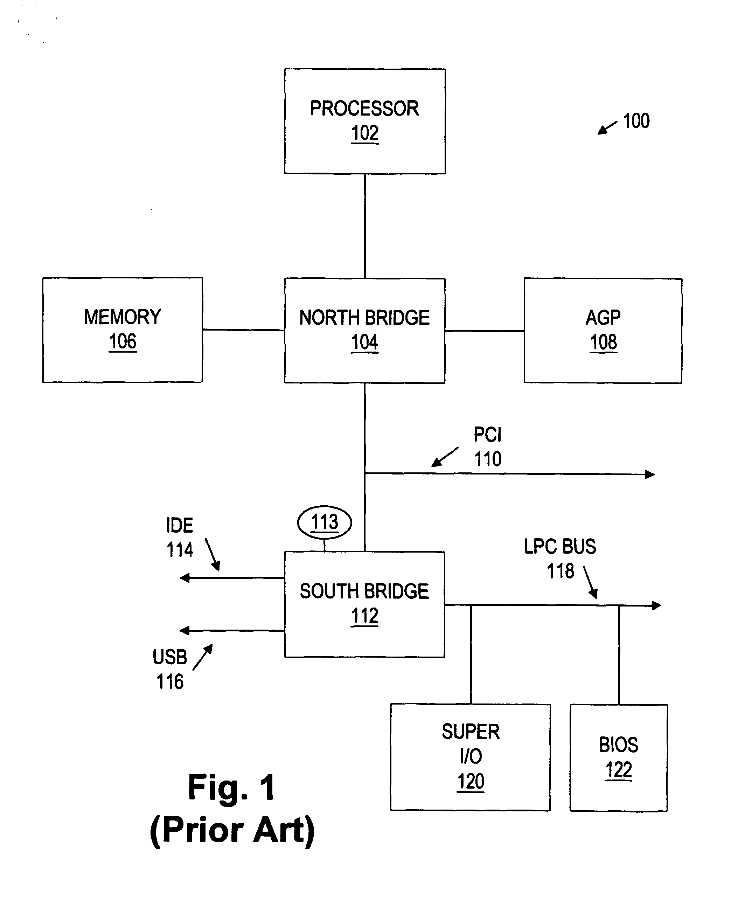

Fig. 1 illustrates an exemplary computer system 100. The computer system 100 includes a processor 102, a north bridge 104, memory 106, Advanced Graphics Port (AGP) memory 108, a Peripheral Component Interconnect (PCI) bus 110, a south bridge 112, a battery, an AT Attachment (ATA) interface 114 (more commonly known as an Integrated Drive Electronics (IDE) interface), a universal serial bus (USB) interface 116, a Low Pin Count (LPC) bus 118, an input/output controller chip (SuperI/O™) 120, and BIOS memory 122. It is noted that the north bridge 104 and the south bridge 112 may include only a single chip or a plurality of chips, leading to the collective term "chipset." It is also noted that other buses, devices, and/or subsystems may be included in the computer system 100 as desired, e.g. caches, modems, parallel or serial interfaces, SCSI interfaces, network interface cards, etc. ["SuperI/O" is a trademark of National Semiconductor Corporation of Santa Clara, Calif.]

The processor 102 is coupled to the north bridge 104. The north bridge 104 provides an interface between the processor 102, the memory 106, the AGP memory 108, and the PCI bus 110. The south bridge 112 provides an interface between the PCI bus 110 and the peripherals, devices, and subsystems coupled to the IDE interface 114, the USB interface 116, and the LPC bus 118. The battery 113 is shown coupled to the south bridge 112. The Super I/O™ chip 120 is coupled to the LPC bus 118.

The north bridge 104 provides communications access between and/or among the processor 102, memory 106, the AGP memory 108, devices coupled to the PCI bus 110, and devices and subsystems coupled to the south bridge 112. Typically, removable peripheral devices are inserted into PCl "slots" (not shown) that connect to the PCI bus 110 to couple to the computer system 100. Alternatively, devices located on a motherboard may be directly connected to the PCI bus 110.

The south bridge 112 provides an interface between the PCI bus 110 and various devices and subsystems, such as a modem, a printer, keyboard, mouse, etc., which are generally coupled to the computer system 100 through the LPC bus 118 (or its predecessors, such as an X-bus or an ISA bus). The south bridge 112 includes the logic used to interface the devices to the rest of computer system 100 through the IDE interface 114, the USB interface 116, and the LPC bus 118.

Initializing registers with default values after a processor reset is a known technique. Such a technique is disclosed in 'intel 82802 AB/82802 AC Firmware Hub' Datasheet published by intel on 30 November 2000.

From a hardware point of view, an x86 operating environment provides little for protecting user privacy, providing security for corporate secrets and assets, or protecting the ownership rights of content providers. All of these goals, privacy, security, and ownership (collectively, PSO) are becoming critical in an age of Internet-connected computers. The original personal computers were not designed in anticipation of PSO needs.

From a software point of view, the x86 operating environment is equally poor for PSO. The ease of direct access to the hardware through software or simply by opening the cover of the personal computer allows an intruder or thief to compromise most security software and devices. The personal computer's exemplary ease of use only adds to the problems for PSO.

### SUMMARY OF THE INVENTION

In accordance with the present invention, a processor is provided. The processor includes a first register configured to store one or more hardware-debug-test (HDT) enable bits, a first control logic coupled to receive a plurality of HDT input signals, and a second control logic coupled to the first register. The first control logic is coupled to access the first register. The second control logic is configured to store one or more default values in the first register in response to a reset of the processor. The processor is characterized in that when the processor is in a system management mode and the HDT enable status bits indicate HDT mode is disabled, a predetermined input into HDT control logic changes the HDT mode to enabled.

In accordance with the present invention, a method for determining an HDT mode enable status is provided. The method includes receiving a request to initiate the HDT mode, determining HDT mode enable status, initiating the HDT mode if the HDT mode enable status is set to enabled, characterized in that when a processor is in system management mode and the HDT status enable bits indicate HDT is disabled, the method includes providing a predetermined input into HDT control logic which changes the HDT mode to enabled.

### BRIEF DESCRIPTION OF THE DRAWINGS

The invention may be understood by reference to the following description taken in conjunction with the accompanying drawings, in which like reference numerals identify similar elements, and in which:
Figure 1 illustrates a block diagram of a prior art computer system;
Figure 2 illustrates a flowchart of an embodiment of data and command flow in a computer system having a secure execution box, according to one aspect of the present invention;
Figure 3 illustrates a block diagram of an embodiment of a computer system having SMM MSRs, according to one aspect of the present invention.
Figs. 4A-4D illustrate block diagrams of embodiments of processors including lock registers and logic, according to various aspects of the present invention;
Fig. 5 illustrates a flowchart of an embodiment of a method for initiating HDT mode, according to one aspect of the present invention;
Fig. 6 illustrates a flowchart of an embodiment of a method for changing the HDT enable status, according to one aspect of the present invention;
Fig. 7 illustrates a flowchart of an embodiment of a method for initiating the microcode loader, according to one aspect of the present invention; and
Fig. 8 illustrates a flowchart of an embodiment of a method for changing the microcode loader enable status, according to one aspect of the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the scope of the invention as defined by the appended claims.

### MODE(S) FOR CARRYING OUT THE INVENTION

Illustrative embodiments of the invention are described below. In the interest of clarity, not all features of an actual implementation are described in this specification. It will, of course, be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure. The use of a letter in association with a reference number is intended to show alternative embodiments or examples of the item to which the reference number is connected.

System Management Mode (SMM) is a mode of operation in the computer system that was implemented to conserve power. The SMM was created for the fourth generation x86 processors. As newer x86 generation processors have appeared, the SMM has become relatively transparent to the operating system. That is, computer systems enter and leave the SMM with little or no impact on the operating system.

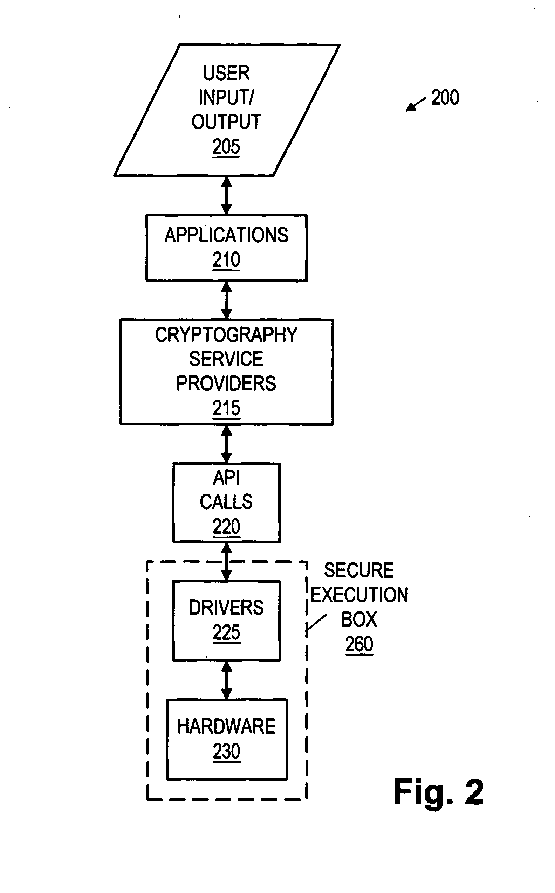

Fig. 2 illustrates a block diagram of an embodiment of a flowchart showing data and command flow in a computer system having a secure execution box 260, according to one aspect of the present invention. User input and output (I/O) data and/or commands 205 are provided to and received from one or more applications 210. The applications 210 exchange data and commands with cryptography service providers 215 within the computer system, such as the computer system 100 or any other computer system. The cryptography service providers 215 may use API (Application Programming Interface) calls 220 to interact with drivers 225 that provide access to hardware 230.

According to one aspect of the present invention, the drivers 225 and the hardware 230 are part of a secure execution box configured to operate in a secure execution mode (SEM) 260. Trusted privacy, security and ownership (PSO) operations, also referred to simply as security operations, may take place while the computer system is in SEM 260. Software calls propagated from the user I/O 205 and/or the applications 210 may be placed into the secure execution box in SMM 260. The software calls have access to the secure execution box in SEM 260 to various security hardware resources.

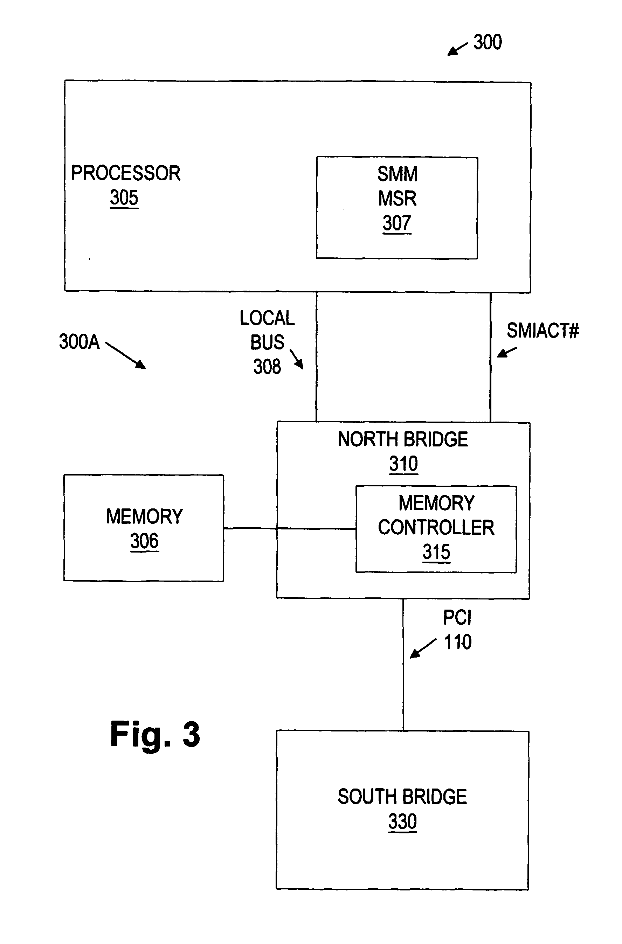

Fig. 3 illustrates a block diagram of an embodiment of a computer systems 300 with SMM MSRs, according to various aspects of the present invention. Fig. 3 includes a processor 305, a north bridge 310, memory 306, and a south bridge 330. The processor includes one or more SMM MSRs (machine specific registers) 307. The north bridge 310 includes a memory controller 315. The north bridge 310 is coupled between the processor 305 and the south bridge 330, to the processor 305 through a local bus 308 and to the south bridge 330 through the PCI bus 110. The north bridge 310 is coupled to receive the SMIACT# signal from the processor 305.

In the embodiment of Fig. 3, the computer system 300 signals that the processor 305 is in SMM using standard processor signals (e.g. SMIACT# to the north bridge 310) and/or bus cycles on the local bus 308 and PCI bus 110.

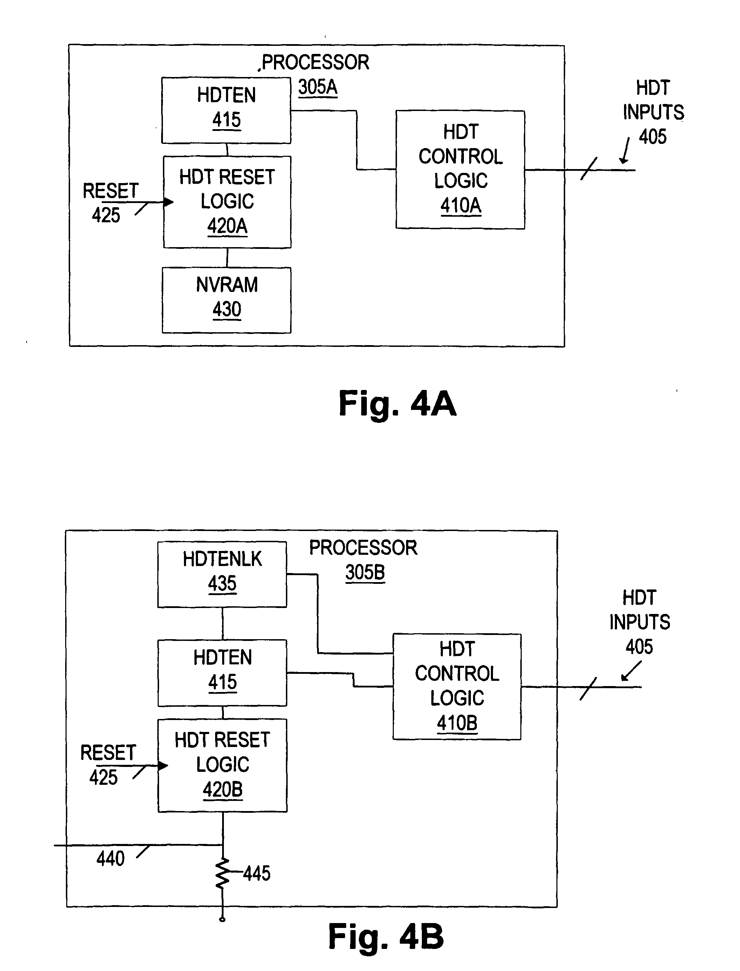

In various embodiments of the present invention, the security of SMM is assumed. It is noted that one or more so-called "backdoors" may exist that could be exploited to compromise the security of SMM. The issues contemplated include misuse of the hardware debug test (HDT) mode of the processor 305 as well as the ability of the processor 305 to load and replace microcode. Illustrated in Figs. 4A-D are various embodiments 305A, 305B, 305C, 305D of the processor 305, each of which includes various security protections against one or more backdoor attacks.

In Fig. 4A, the processor 305A includes HDT control logic 410A, HDT reset logic 420A, and one or more registers, including an HDT enable register 415 and non-volatile random access memory (NVRAM) 430. As shown, the HDT control logic 410A is coupled to receive a plurality of input signals through a plurality of HDT pins 405. The HDT control logic 410A is further coupled to the HDT enable register 415. The HDT reset logic 420A is coupled to receive a RESET signal over a line 425 and to access (i.e. read and write) the HDT enable register 415 and the NVRAM 430.

In Fig. 4B, the processor 305B of Fig. 4B includes HDT control logic 410B, HDT reset logic 420B, and two registers, including the HDT enable register 415 and an HDT enable lock register 435. As shown, the HDT control logic 410B is coupled to receive a plurality of input signals through the plurality of HDT pins 405. The HDT control logic 410B is further coupled to the HDT enable register 415 and the HDT enable lock register 435. The HDT reset logic 420B is coupled to receive the RESET signal over the line 425 and a signal, such as over a line 440, through a pull-up (or pull-down) resistor 445.

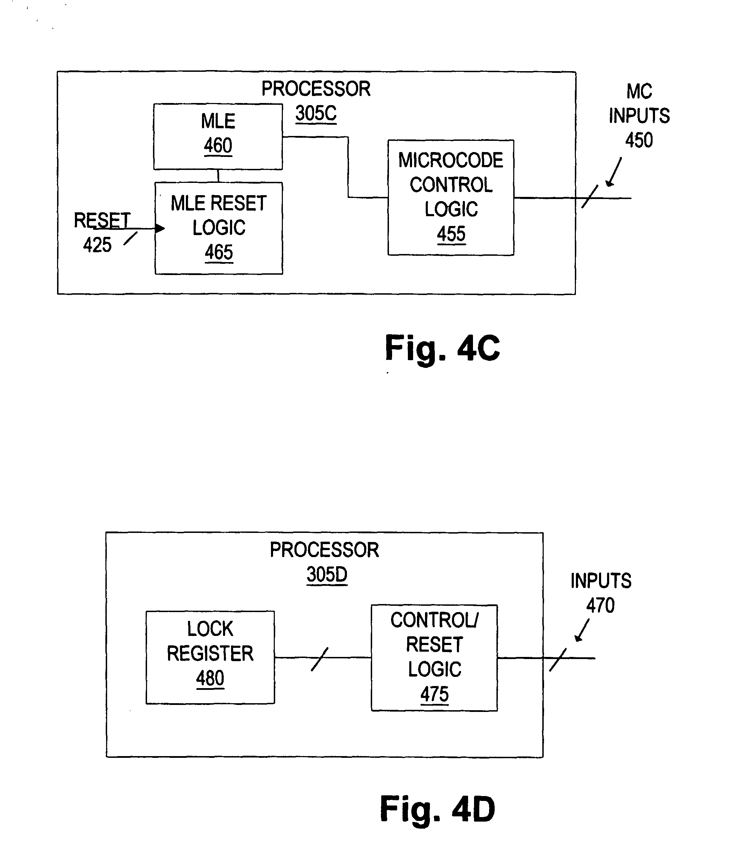

In Fig. 4C, the processor 305C includes microcode control logic 455, microcode loader enable reset logic 465, and one or more registers, including a microcode loader enable register 460. As shown, the microcode control logic 455 is coupled to receive a plurality of input signals through a plurality of microcode input pins 450. The microcode control logic 455 is further coupled to the microcode loader enable register 460. The microcode loader enable reset logic 465 is coupled to receive the RESET signal and to access the microcode loader enable register 460.

In Fig. 4D, the processor 305D includes HDT control logic 410 integrated with the microcode control logic 455, the HDT reset logic 420, and the MLE reset logic 465 to form control/reset logic 475. The HDT enable register 415 and the microcode loader enable register 460 are integrated into a multibit lock register 480. A plurality of inputs 470 are shown to the control/reset logic 475. The plurality of inputs 470 may include the HDT inputs 405, the microcode inputs 450, and/or the reset signaling means. Other embodiments (not shown) integrate only the HDT control logic 410 and the microcode control logic 455, or just the HDT reset logic 420 and the MLE reset logic 465.

According to various embodiments of the present invention, the registers 415, 435, and 460, as well as the NVRAM 430 include storage space for one or more bits. In one embodiment, each register is configured to store a single bit. It is noted that the enable registers 415 and 460 may also be integrated into a single lock register, and the HDT enable lock register 435 may be used as a microcode enable lock register. It is contemplated that the registers 415, 435, 460, and/or 480 could be included in the SMM MSRs 307.

In various embodiments, the HDT enable register 415 is configured to store one or more HDT enable bits signifying whether HDT mode is enabled or disabled. The HDT reset logic 420 is configured to set the one or more HDT enable bits to a default state upon a reset of the processor 305.

Multiple embodiments for controlling the HDT modes are contemplated, such as those illustrated in Figs. 4A and 4B. In one embodiment, the HDT mode is enabled as the default on non-production processors 305 used for engineering and testing. The HDT mode may be disabled as the default in standard production processors 305. In another embodiment, illustrated in Fig. 4A, the default state may be stored in and read from the NVRAM 430. In this embodiment, the default state may be changeable, but in the illustrated embodiment, the default state is set to disabled. In still another embodiment, illustrated in Fig. 4B, the default state is set using a strapping option. The default value is provided to the HDT reset logic 420B through the pull-up (or pull-down) resistor 445.

Multiple embodiments for controlling the microcode loader modes are also contemplated, such as those illustrated in Figs. 4C and 4D. In one embodiment, not illustrated, the microcode update mode is enabled as the default on non-production processors 305 used for engineering and testing. The microcode update mode may be disabled as the default in standard production processors 305. In another embodiment, similar to that illustrated in Fig. 4A, the default state may be stored in and read from the NVRAM 430. In this embodiment, the default state may be changeable, but in the illustrated embodiment the default state is set to disabled. In still another embodiment, illustrated in Fig. 4B, the default state is using a strapping option. The default value is provided to the MLE reset logic 465 through the pull-up (or pull-down) resistor 445.

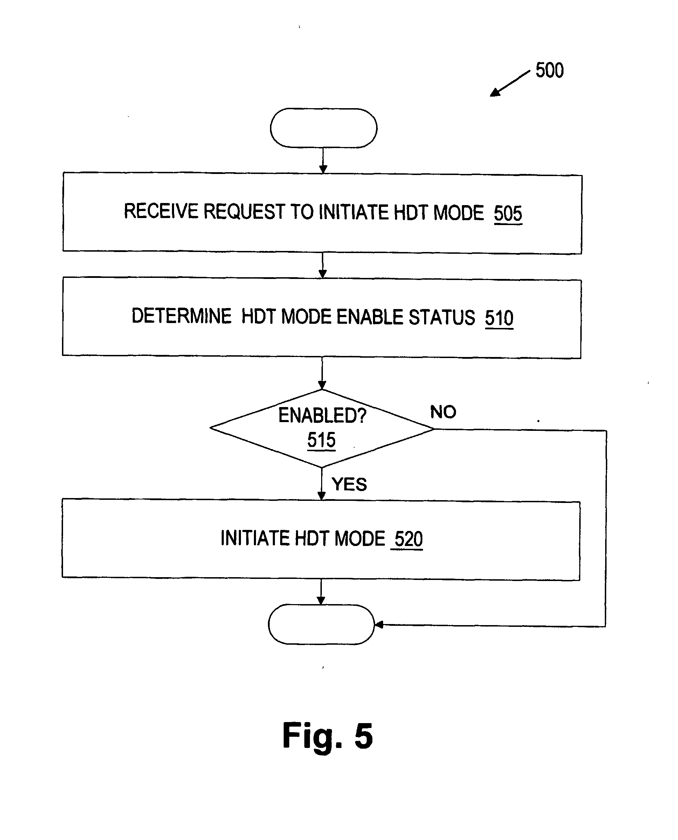

Turning now to Fig. 5, a method 500 for initiating the HDT mode is shown. In response to receiving a request to enter the HDT mode (step 505), the HDT control logic 410 checks the status of the one or more HDT enable bits to see if the HDT mode is enabled or disabled (step 510). If the HDT mode is enabled (step 515), then the HDT control logic 410 initiates the HDT mode (step 520). If the HDT mode is disabled (step 515), then the HDT control logic 410 will not initiate the HDT mode.

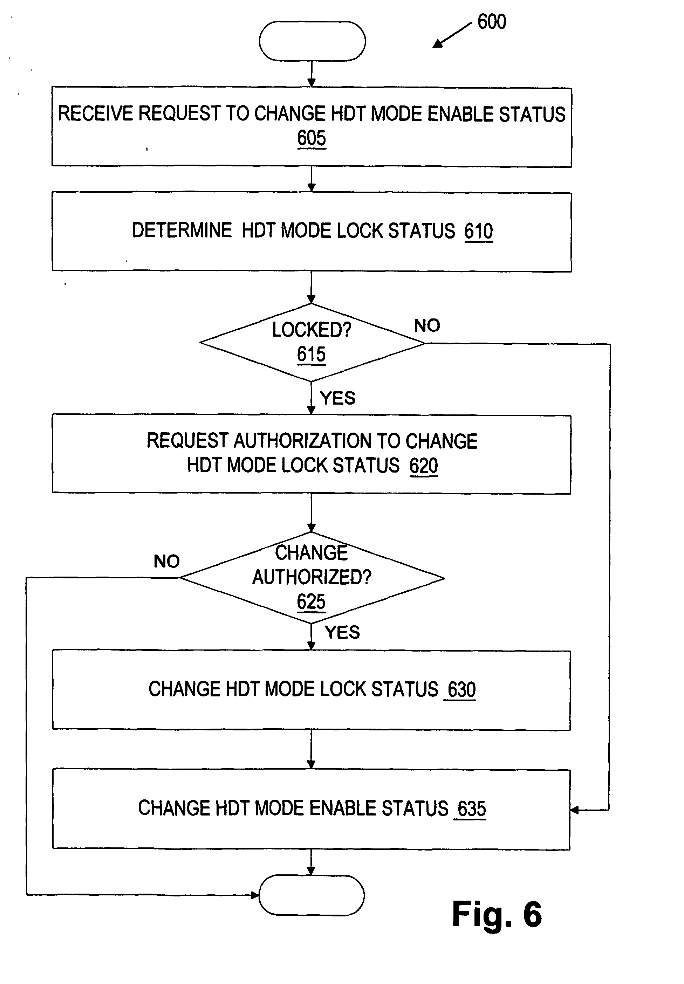

Turning now to Fig. 6, a method 600 for changing the HDT mode enable status, which includes an HDT mode lock, is shown. In response to receiving a request to enter the HDT mode (step 605), the HDT control logic 410 checks the status of the one or more HDT enable lock bits to determine if the HDT lock mode is locked or unlocked (step 610). If the HDT lock mode is unlocked (step 615), then the HDT control logic 410 initiates HDT mode (step 635). If the HDT lock mode is locked (step 615), then the HDT control logic 410 requests authorization to change the HDT lock mode status (step 620). If the change is authorized (step 625), then the HDT control logic 410 changes the HDT mode lock bit to unlocked (step 630). If the change is not authorized (step 625), then the HDT control logic 410 does not change the HDT mode lock bit.

In various embodiments, the HDT enable status may be changed by setting or resetting the one or more HDT enable status bits. For example, the HDT mode may be disabled, but inside SMM, a predetermined input to the HDT control logic 410 may signal the HDT control logic 410 to change the HDT mode status to enabled. In the embodiment of Fig. 4A, for example, once signaled, the HDT control logic 410 would change the status of the HDT enable bit from disabled to enabled.

Referring back to the embodiment of Fig. 4B, for example, in response to receiving a request to change the HDT mode status, the HDT control logic 410 checks the status of the one or more HDT enable lock bits to see if the HDT lock mode is enabled or disabled. If the HDT lock mode is disabled, then the HDT control logic 410 may change the HDT mode status. If the HDT lock mode is enabled, then the HDT control logic 410 will not change the HDT mode status.

It is noted that the method 600 may alternatively terminate if the HDT lock mode is locked (step 615), instead of requesting authorization to change the HDT lock mode status (step 620). The method 600 may also include receiving a request to change the HDT lock mode status (not shown) prior to the method 600 requesting authorization (step 620).

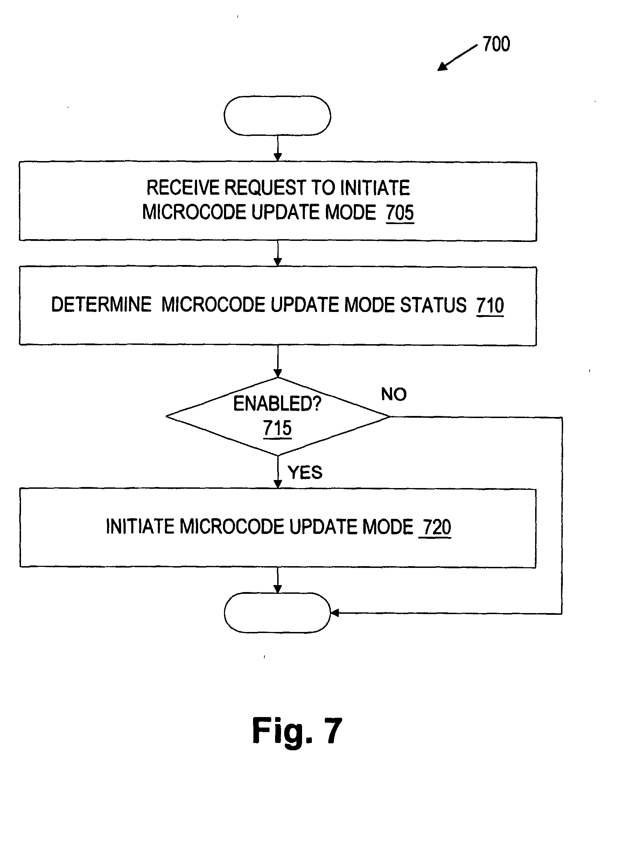

Turning now to Fig. 7, a method 700 for initiating the microcode loader is shown. In response to receiving a request to initiate the microcode update mode (step 705), the microcode control logic 455 checks the status of the one or more microcode enable bits to see if microcode update mode is enabled or disabled (step 710). If the microcode update mode is enabled (step 715), then the microcode control logic 455 initiates the microcode update mode (step 720). If the microcode update mode is disabled (step 715), then the microcode control logic 455 will not initiate the microcode update mode.

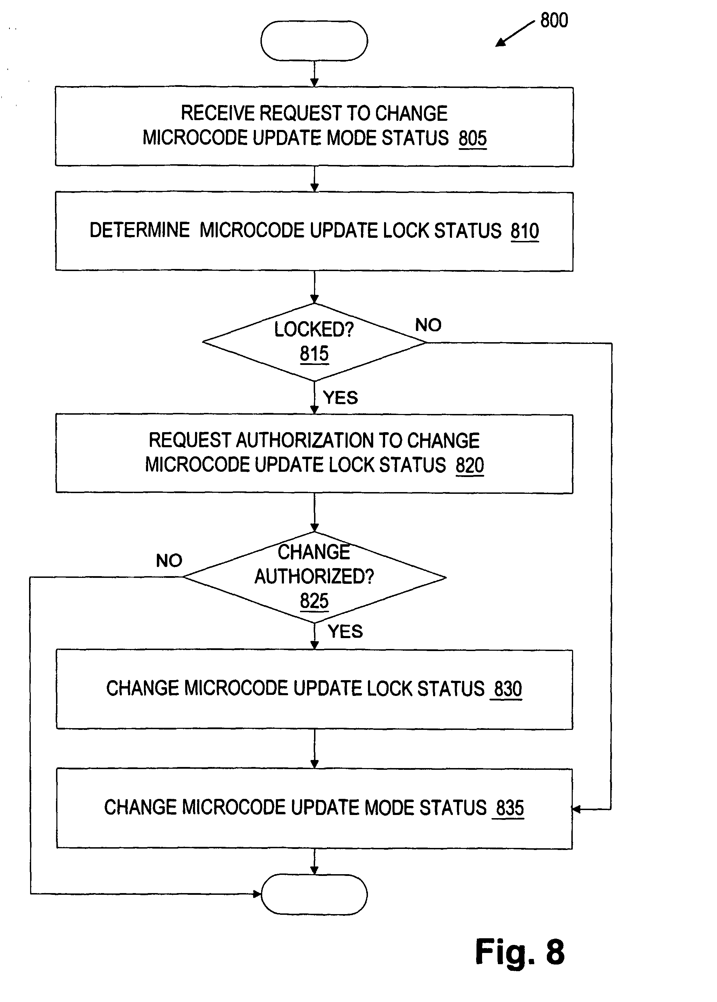

Turning now to Fig. 8, a method 800 for changing the microcode update mode enable status, which includes a microcode mode lock, is shown. In response to receiving a request to enter the microcode mode (step 805), the microcode control logic 455 checks the status of the one or more microcode enable lock bits to see if the microcode mode is locked or unlocked (step 810). If the microcode lock mode is unlocked (step 815), then the microcode control logic 455 initiates the microcode mode (step 835). If the microcode lock mode is locked (step 815), then the microcode control logic 455 requests authorization to change the microcode mode lock status (step 820). If the change is authorized (step 825), then the microcode control logic 455 changes the microcode mode lock bit to unlocked (step 830). If the change is not authorized (step 825), then the microcode control logic 455 does not change the microcode mode lock bit.

In various embodiments, the microcode enable status may be changed by setting or resetting the one or more microcode enable status bits. For example, the microcode mode may be disabled, but inside SMM, a predetermined input to the microcode control logic 455 may signal the microcode control logic 455 to change the microcode mode status to enabled. In the embodiment of Fig. 4C, for example, once signaled, the microcode control logic 455 will change the status of the one or more microcode enable bits from disabled to enabled.

In response to receiving a request to change the microcode mode status, the microcode control logic 455 may check the status of the one or more microcode enable lock bits to determine if the microcode lock mode is enabled or disabled. If the microcode lock mode is disabled, then the microcode control logic 455 may change the microcode mode status. If the microcode lock mode is enabled, then the microcode control logic 455 will not change the microcode mode status.

It is noted that the method 800 may alternatively terminate if the microcode update lock status is locked (step 815), instead of requesting authorization to change the microcode update lock status (step 820). The method 800 may also include receiving a request to change the microcode update lock status (not shown) prior to the method 3500 requesting authorization (step 820).

For the purposes of this disclosure, references to ROM are to be construed as also applying to flash memory and other substantially non-volatile memory types. Note that while the methods of the present invention disclosed herein have been illustrated as flowcharts, various elements of the flowcharts may be omitted or performed in different order in various embodiments. Note also that the methods of the present invention disclosed herein admit to variations in implementation.

Some aspects of the invention as disclosed above may be implemented in hardware or software. Thus, some portions of the detailed descriptions herein are consequently presented in terms of a hardware implemented process and some portions of the detailed descriptions herein are consequently presented in terms of a software-implemented process involving symbolic representations of operations on data bits within a memory of a computing system or computing device. These descriptions and representations are the means used by those in the art to convey most effectively the substance of their work to others skilled in the art using both hardware and software. The process and operation of both require physical manipulations of physical quantities. In software, usually, though not necessarily, these quantities take the form of electrical, magnetic, or optical signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantifies. Unless specifically stated or otherwise as may be apparent, throughout the present disclosure, these descriptions refer to the action and processes of an electronic device, that manipulates and transforms data represented as physical (electronic, magnetic, or optical) quantities within some electronic device's storage into other data similarly represented as physical quantities within the storage, or in transmission or display devices. Exemplary of the terms denoting such a description are, without limitation, the terms "processing," "computing," "calculating," "determining," "displaying," and the like.

Note also that the software-implemented aspects of the invention are typically encoded on some form of program storage medium or implemented over some type of transmission medium. The program storage medium may be magnetic *e.g.,* a floppy disk or a hard drive) or optical (*e.g.,* a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the invention. Accordingly, the protection sought herein is as set forth in the claims below.

## Claims

1. A processor, comprising:
a first register (415) configured to store one or more hardware-debug-test (HDT) enable bits;
a first control logic (410) coupled to receive a plurality of HDT input signals, wherein the first control logic is coupled to access the first register; and
a second control logic (420) coupled to the first register, wherein the second control logic is configured to store one or more default values in the first register in response to a reset of the processor,
**characterized in that** when the processor (305) is in a System Management Mode and the HDT enable status bits indicate HDT mode is disabled, a predetermined input into HDT control logic (410) changes the HDT mode to enabled.

2. The processor of claim 1, wherein the first control logic is further configured to receive a request to enter an HDT mode, wherein the first control logic is further configured to read selected entries of the one or more HDT enable bits stored in the first register in response to the request to enter HDT mode, and wherein the first control logic is further configured to grant or deny the request to enter HDT mode based on the selected entries of the one or more HDT enable bits.

3. The processor of claim 1, further comprising:
one or more non-volatile memory cells configured to store the one or more default values for the one or more HDT enable bits, wherein the second control logic is further coupled to read the one or more default values for the one or more HDT enable bits from the one or more non-volatile memory cells and to write the one or more default values for the one or more HDT enable bits into the first register in response to the reset of the processor.

4. The processor of claim 1, wherein the second control logic is further coupled to receive a signal indicative of the one or more default values for the one or more HDT enable bits and to write the one or more default values for the one or more HDT enable bits into the first register in response to the reset of the processor.

5. The processor of claim 1, further comprising:
a third register configured to store one or more microcode loader enable bits; a third control logic coupled to receive a plurality of microcode inputs, wherein the third control logic is coupled to access the third register; and
a fourth control logic coupled to the third register, wherein the fourth control logic is configured to store one or more default values in the third register in response to a reset of the processor.

6. The processor of claim 5, wherein the third control logic is further configured to receive a request to modify microcode, wherein the third control logic is further configured to read selected entries of the one or more microcode loader enable bits stored in the third register in response to the request to modify microcode, and wherein the third control logic is farther configured to grant or deny the request to modify microcode based on the selected entries of the one or more microcode loader enable bits.

7. The processor of claim 1, further comprising:
a second register coupled to the first control logic, wherein the second register is configured to store one or more HDT enable lock bits.

8. The processor of claim 7, wherein the first control logic is further configured to receive a request to modify HDT mode status, wherein the first control logic is further configured to read selected entries in the one or more HDT enable lock bits stored in the second register in response to the request to modify HDT mode status, and wherein the first control logic is further configured to grant or deny the request to modify HDT mode based on the selected entries in the one or more HDT enable lock bits.

9. A method for determining an HDT mode enable status, the method comprising:
receiving a request to initiate the HDT mode;
determining HDT mode enable status;
initiating the HDT mode if the HDT mode enable status is set to enabled;
**characterized in that** when a processor (305) is in system management mode and the HDT enable status bits indicate HDT is disabled, the method includes providing a predetermined input into HDT control logic (410) which changes the HDT mode to enabled.

10. The method of claim 9, wherein determining HDT mode enable status comprises reading one or more entries corresponding to one or more HDT enable bits from a register.

## Patentansprüche

1. Prozessor mit:
einem ersten Register (415), das zum Speichern von einem oder mehreren Hardware-Debug-Test(HDT)-Freigabebits ausgebildet ist;
einer ersten Steuerlogik (410), die zum Empfangen mehrerer HDT-Eingangssignale gekoppelt ist, wobei die erste Steuerlogik zum Zugriff auf das erste Register gekoppelt ist; und
einer mit dem ersten Register gekoppelten zweiten Steuerlogik (420), wobei die zweite Steuerlogik ausgebildet ist, um in Reaktion auf das Rücksetzen eines Prozessors einen oder mehrere Voreinstellungswerte im ersten Register zu speichern,
**dadurch gekennzeichnet, daß**, wenn sich der Prozessor (305) in einem System-Management-Modus befindet und die HDT-Freigabezustandsbits angeben, daß der HDT-Modus deaktiviert ist, ein vorbestimmtes Eingangssignal in die HDT-Steuerlogik (410) den HDT-Modus in den aktivierten Zustand ändert.

2. Prozessor nach Anspruch 1, bei dem die erste Steuerlogik ferner dazu ausgebildet ist, eine Anforderung zum Eintritt in einen HDT-Modus zu empfangen, wobei die erste Steuerlogik ferner derart ausgebildet ist, ausgewählte Einträge des einen oder der mehreren, in dem ersten Register gespeicherten HDT-Freigabebits in Reaktion auf die Anforderung nach dem Eintritt in den HDT-Modus zu lesen, und wobei die erste Steuerlogik ferner derart ausgebildet ist, daß sie die Anforderung nach dem Eintritt in den HDT-Modus basierend auf den ausgewählten Einträgen des einen oder der mehreren HDT-Freigabebits gewährt oder ablehnt.

3. Prozessor nach Anspruch 1, ferner mit:
einer oder mehreren nicht-flüchtigen Speicherzellen, die zum Speichern des einen oder der mehreren Voreinstellungswerte für das eine oder die mehreren HDT-Freigabebits ausgebildet sind, wobei die zweite Steuerlogik ferner verbunden ist, um den einen oder die mehreren Voreinstellungswerte für das eine oder die mehreren HDT-Freigabebits aus der einen oder den mehreren nicht-flüchtigen Speicherzellen zu lesen und den einen oder die mehreren Voreinstellungswerte für das eine oder die mehreren HDT-Freigabebits in Reaktion auf das Rücksetzen des Prozessors in das erste Register zu schreiben.

4. Prozessor nach Anspruch 1, bei dem die zweite Steuerlogik ferner verbunden ist, um ein Signal zu empfangen, das den einen oder die mehreren Voreinstellungswerte für das eine oder die mehreren HDT-Freigabebits angibt, und um den einen oder die mehreren Voreinstellungswerte für das eine oder die mehreren HDT-Freigabebits in Reaktion auf das Rücksetzen des Prozessors in das erste Register zu schreiben.

5. Prozessor nach Anspruch 1, ferner mit:
einem dritten Register, das zum Speichern eines oder mehrerer Mikrocode-Ladeeinrichtung-Freigabebits ausgebildet ist;
einer dritten Steuerlogik, die zum Empfangen mehrerer Mikrocodeeingänge verbunden ist, wobei die dritte Steuerlogik zum Zugreifen auf das dritte Register verbunden ist; und
einer vierten Steuerlogik, die mit dem dritten Register verbunden ist, wobei die vierte Steuerlogik derart ausgebildet ist, daß sie in Reaktion auf das Rücksetzen des Prozessors einen oder mehrere Voreinstellungswerte im dritten Register speichert.

6. Prozessor nach Anspruch 5, bei dem die dritte Steuerlogik ferner derart ausgebildet ist, daß sie eine Anforderung zur Veränderung des Mikrocodes empfängt, wobei die dritte Steuerlogik ferner derart ausgebildet ist, daß sie ausgewählte Einträge des einen oder der mehreren, in dem dritten Register gespeicherten Mikrocode-Ladeeinrichtung-Freigabebits in Reaktion auf die Anforderung nach einer Veränderung des Mikrocodes liest, und wobei die dritte Steuerlogik ferner derart ausgebildet ist, daß sie die Anforderung nach einer Veränderung des Mikrocodes basierend auf den ausgewählten Einträgen des einen oder der mehreren Mikrocode-Ladeeinrichtung-Freigabebits gewährt oder ablehnt.

7. Prozessor nach Anspruch 1, ferner mit:
einem mit der ersten Steuerlogik verbundenen zweiten Register, wobei das zweite Register zum Speichern eines oder mehrerer HDT-Freigabe-Sperrbits ausgebildet ist.

8. Prozessor nach Anspruch 7, bei dem die erste Steuerlogik ferner zum Empfangen einer Anforderung nach einer Veränderung des HDT-Modus-Status ausgebildet ist, wobei die erste Steuerlogik ferner derart ausgebildet ist, daß sie ausgewählte Einträge des einen oder der mehreren, in dem zweiten Register gespeicherten HDT-Freigabe-Sperrbits in Reaktion auf die Anforderung nach einer Veränderung des HDT-Modus-Status liest, und wobei die erste Steuerlogik ferner derart ausgebildet ist, daß sie die Anforderung nach einer Veränderung des HDT-Modus-Status basierend auf den ausgewählten Einträgen des einen oder der mehreren HDT-Freigabe-Sperrbits gewährt oder ablehnt.

9. Verfahren zum Bestimmen eines HDT-Modus-Freigabestatus, wobei das Verfahren umfaßt:
Empfangen einer Anforderung zum Initiieren des HDT-Modus;
Bestimmen des HDT-Modus-Status;
Initiieren des HDT-Modus, wenn der HDT-Modus-Freigabestatus aktiviert ist,
**dadurch gekennzeichnet, daß**, wenn ein Prozessor (305) sich im System-Management-Modus befindet und die HDT-Freigabestatusbits HDT als deaktiviert angeben, das Verfahren das Liefern eines vorbestimmten Eingangssignals an die HDT-Eingangslogik (410) vorsieht, welches den HDT-Modus aktiviert.

10. Verfahren nach Anspruch 9, bei dem das Bestimmen des HDT-Modus-Freigabestatus das Lesen eines oder mehrerer Einträge aus einem Register umfaßt, die einem oder mehreren HDT-Freigabebits entsprechen.

## Revendications

1. Processeur, comportant :
un premier registre (415) configuré pour stocker un ou plusieurs binaire(s) de validation de test de débogage de matériel (HDT) ;
une première logique de commande (410) couplée pour recevoir une pluralité de signaux d'entrée de test HDT, dans lequel la première logique de commande est couplée pour accéder au premier registre ; et
une seconde logique de commande (420) couplée au premier registre, dans lequel la seconde logique de commande est configurée pour stocker une ou plusieurs valeurs implicite(s) dans le premier registre en réponse à une réinitialisation du processeur,
**caractérisé en ce que**, lorsque le processeur (305) est dans un Mode de Gestion de Système et que les binaires d'état de validation de test HDT indiquent que le mode de test HDT est invalidé, une entrée prédéterminée dans la logique de commande de test HDT (410) change le mode de test HDT en mode validé.

2. Processeur selon la revendication 1 dans lequel la première logique de commande est, de plus, configurée pour recevoir une requête pour entrer un mode de test HDT, dans lequel la première logique de commande est configurée, de plus, pour lire des entrées sélectionnées d'un ou de plusieurs binaire(s) de validation de test HDT stocké(s) dans le premier registre en réponse à la requête pour entrer un mode de test HDT, et dans lequel la première logique de commande est configurée, de plus, pour satisfaire ou refuser la requête pour entrer un mode de test HDT sur la base des entrées sélectionnées d'un ou de plusieurs binaire(s) de validation de test HDT.

3. Processeur selon la revendication 1 comprenant, de plus :
une ou plusieurs cellule(s) de mémoire non volatile configurée(s) pour stocker l'une ou plusieurs des valeurs implicite(s) correspondant à l'un ou à plusieurs binaire(s) de validation de test HDT, dans lequel la seconde logique de commande est couplée, de plus, pour lire la ou les valeur(s) implicite(s) correspondant à un ou à plusieurs binaire(s) de validation de test HDT à partir de l'une ou de plusieurs cellules de mémoire non volatile et pour écrire la ou les valeur(s) implicite(s) correspondant à un ou à plusieurs binaire(s) de validation de test HDT dans le premier registre en réponse à la réinitialisation du processeur.

4. Processeur selon la revendication 1 dans lequel la seconde logique de commande est, de plus, couplée pour recevoir un signal indicateur de la ou des valeur(s) implicite(s) correspondant à un ou à plusieurs binaire(s) de validation de test HDT et pour écrire la ou les valeur(s) implicites correspondant à un ou à plusieurs binaire(s) de validation de test HDT dans le premier registre en réponse à la réinitialisation du processeur.

5. Processeur selon la revendication 1 comprenant, de plus :
un troisième registre configuré pour stocker un ou plusieurs binaire(s) de validation de chargeur de microcode, une troisième logique de commande couplée pour recevoir une pluralité d'entrées de microcode, dans lequel la troisième logique de commande est couplée pour accéder au troisième registre ; et
une quatrième logique de commande couplée au troisième registre, dans lequel la quatrième logique de commande est configurée pour stocker une ou plusieurs valeur(s) implicite(s) dans le troisième registre en réponse à une réinitialisation du processeur.

6. Processeur selon la revendication 5 dans lequel la troisième logique de commande est, de plus, configurée pour recevoir une requête afin de modifier un microcode, dans lequel la troisième logique de commande est, de plus, configurée pour lire des entrées sélectionnées du ou de plusieurs binaire(s) de validation de chargeur de microcode stocké(s) dans le troisième registre en réponse à la requête pour modifier un microcode, et dans lequel la troisième logique de commande est configurée, de plus, pour accorder ou refuser la requête pour modifier un microcode sur la base des entrées sélectionnées du ou de plusieurs binaire(s) de validation de chargeur de microcode.

7. Processeur selon la revendication 1 comprenant, de plus :
un second registre couplé à la première logique de commande, dans lequel le second registre est configuré pour stocker un ou plusieurs binaire(s) de verrouillage de validation de test HDT.

8. Processeur selon la revendication 7 dans lequel la première logique de commande est, de plus, configurée pour recevoir une requête afin de modifier un état de mode de test HDT, dans lequel la première logique de commande est, de plus, configurée pour lire des entrées sélectionnées dans le ou dans plusieurs binaire(s) de verrouillage de validation de test HDT stocké(s) dans le second registre en réponse à la requête pour modifier l'état de mode de test HDT, et dans lequel la première logique de commande est configurée, de plus, pour accorder ou refuser la requête pour modifier un mode de test HDT sur la base des entrées sélectionnées dans le ou dans plusieurs binaire(s) de verrouillage de validation de test HDT.

9. Procédé pour déterminer un état de validation de mode de test HDT, le procédé consistant à :
recevoir une requête pour initier le mode de test HDT ;
déterminer l'état de validation du mode de test HDT ;
initier le mode HDT si l'état de validation de mode de test HDT est établi pour être validé ;
**caractérisé en ce que**, lorsqu'un processeur (305) se trouve dans mode de gestion de système et que les binaires d'état de validation de test HDT indiquent que le test HDT est invalidé, le procédé inclut de fournir une entrée prédéterminée dans la logique de commande de test HDT (410) qui modifie le mode de test HDT en mode validé.

10. Procédé selon la revendication 9 dans lequel la détermination de l'état de validation du mode de test HDT comporte de lire une ou plusieurs entrées correspondant à un ou à plusieurs binaires de validation de mode de test HDT à partir d'un registre.
